(19) Europäisches Patentamt
European Patent Office
Office européen des brevets

(11) Publication number: **0 473 823 A1**

# EUROPEAN PATENT APPLICATION

(21) Application number: **90117105.8**

(22) Date of filing: **05.09.90**

(51) Int. Cl.5: **B32B 27/08**, C08F 210/02, C08L 23/08

(43) Date of publication of application:
**11.03.92 Bulletin 92/11**

(84) Designated Contracting States:
**DE FR GB IT**

(71) Applicant: **SHOWA DENKO KABUSHIKI KAISHA**
**13-9, Shiba Daimon 1-chome**
**Minato-ku, Tokyo 105(JP)**

(72) Inventor: **Tsutsumi, Katsuaki, c/o Showa Denko K.K.**
**Oita Research Laboratory, 2, Oaza Nakanosu Oita-shi, Oita(JP)**
Inventor: **Inazawa, Shintaro, c/o Showa Denko K.K.**
**Oita Research Laboratory, 2, Oaza Nakanosu Oita-shi, Oita(JP)**
Inventor: **Yasuda, Shin-ichi, c/o Showa Denko K.K.**
**Oita Research Laboratory, 2, Oaza Nakanosu Oita-shi, Oita(JP)**

(74) Representative: **Henkel, Feiler, Hänzel & Partner**
**Möhlstrasse 37**
**W-8000 München 80(DE)**

(54) **Laminate and process for producing the same.**

(57) A laminate and process for producing the laminate, wherein the laminae comprises at least one ethylene-vinyl alcohol copolymer layer and at least one adhesive layer. The adhesive layer comprises a (i) random copolymer layer comprising ethylene units and radical-polymerizable acid anhydride units and is obtained through a polymerization during which (a) a first compoud having two or more double bonds per molecule or an antioxidant is added to the polymerization system; or (ii) a mixture of (a) a randam copolymer comprising ethylene units and radical-polymerizable acid anhydride units and (b) at least one menber selected form the group consisiting of (1) a secod compound having two or more hydroxyl groups per molecue, (2) a third compound having two or more epoxy groups per molecule, (3) a fourth compound obtained by partial ionic crosslinking of a copolymer of ethylene and an unsaturated carboxylic acid or a derivatives thereof, and (4) a salt of a metal of Group I or I of the periodic table.

FIELD OF THE INVENTION

The present invention relates to a laminate comprising an ethylene-vinyl alcohol copolymer and a process for producing the laminate. More particularly, it relates to a laminate useful as a wrapping or packaging material for foods or other perishable materials and also relates to a process for producing such a laminate.

BACKGROUND OF THE INVENTION

Ethylene-vinyl alcohol copolymers are extensively used as wrapping or packaging materials for foods or perishable items because of their excellent oxygen barrier properties. However, since they have poor moisture barrier properties, heat sealability and other properties, ethylene-vinyl alcohol copolymers are normally utilized as laminates comprising these copolymers and other suitable resins. In such laminates, which are produced by co-extrusion laminating, dry laminating, extrusion coating, or other techniques, special adhesive resins are employed in many cases to form interfacial layers between the layers of the ethylene-vinyl alcohol copolymers layers and the layers of other resins, because the copolymers have poor adhesion properties. Adhesive resins, such as maleic anhydride-grafted polyolefin resins, have often been used. Although such graft polymers show excellent adhesion to the above-described ethylene-vinyl alcohol copolymers, they have hygenic, economic, and other problems, and are also defective in that their possible applications as interlaminar adhesive layer are limited in view of their lack of bondability to other layers.

Alternatively, copolymers of ethylene and acid anhydrides have been used, but in order to impart sufficient adhesion properties to these copolymers, acid anhydrides must be incorporated in considerable quantities, so that the resulting copolymers necessarily have such low molecular weights that are not useful for wrapping or packaging material. It has, therefore, been difficult to obtain practical laminates from such copolymers due to the very poor formability attributable to their low molecular weights.

SUMMARY OF THE INVENTION

An object of the present invention is to provide a laminate comprising at least one ethylene-vinyl alcohol and having all of the characteristics of good interlaminar adhesion, hygienic quality and low cost.

Another object of the present invention is to provide a process for efficiently producing the above laminate.

It has been discovered that a laminate having the above properties can efficiently be produced by utilizing, as an adhesive layer; (i) a random copolymer comprising ethylene units and radical-polymerizable acid anhydride units and which is obtained through a polymerization during which (a) a first compound having two or more double bonds per molecule or (b) an antioxidant is added to the polymerization system; or (ii) a mixture of (a) a random copolymer comprising ethylene units and radical-polymerizable acid anhydride units, and (b) at least one member selected from the group consisting of (1) a second compound having two or more hydroxyl groups per molecule, (2) a third compound having two or more epoxy groups per molecule; (3) a fourth compound obtained by partial ionic crosslinking of a copolymer of ethylene and an unsaturated carboxylic acid or a derivative thereof, and (4) a salt of a metal of Group I or II of the periodic table.

DETAILED DESCRIPTION OF THE INVENTION

An ethylene-vinyl alcohol copolymer employed in a laminate of the present invention is one which is preferably obtained by saponifying an ethylene-vinyl acetate copolymer and which preferably has an ethylene content of 20 to 70 mol%, more preferably 25% to 45 mol% and a vinyl alcohol content of 30 to 80 mol%, more preferably 55 to 75 mol%. An ethylene content of lower than 20 mol% results in poor extrusion formability, while an ethylene contents exceeding 70 mol% impair oxygen barrier properties, which are characteristic of ethylene-vinyl alcohol copolymers, making the copolymer unsuitable for practical use. A vinyl alcohol content of lower than 30 mol% result in insufficient oxygen barrier properties, while a vinyl alcohol content exceeding 80 mol% makes the extrusion forming of the copolymer difficult. The ethylene-vinyl alcohol copolymer may contain up to 5 mol% of vinyl acetate. The melt flow rate measured according to JIS K-7210 at 230°C with a load of 2.16 Kg (hereafter "MFR(230)") of the ethylene-vinyl alcohol copolymer is generally from 0.5 to 50 g/10 min, preferably from 3 to 20 g/10 min. If MFR(230) of the copolymer is below 0.5 g/10 min, the copolymer has poor melt-flow characteristics and cannot be processed at ordinary speeds. If MFR(230) thereof exceeds 50 g/10 min, the copolymer has too low of a melt tension and impaired formability.

In a first embodiment of the present invention, an adhesive layer that can be employed in a laminate on the present invention is a random copolymer which comprises at least one ethylene unit and at least one radical-polymerizable acid anhydride unit and which is obtained through polymerization during which (a) a compound having two or more double bonds per molecule or (b) an antioxidant is added to the polymerization system. According to need, the random copolymer may be a polymer consisting of three or more kinds of monomer units including units derived from another radical-polymerizable comonomer (third comonomer).

In producing a random copolymer to be employed in a laminate of this invention, a well known process for producing high-pressure-process low-density polyethylene can be utilized without any modification, for example, using two compressors connected in series to increase pressure of the reaction system to a predetermined level. For examle, ethylene, a radical-polymerizable acid anhydride, and a third comonomer can be polymerized with the aid of a polymerization initiator under conditions of 100 to 300°C and 1,000 to 3,500 atm, thereby to obtain a copolymer for use the present invention. During this polymerization, an additive such a compound having two or more double bonds per molecule or an antioxidant can be added to the polymerization system. The introduction of the additive into the polymerization system can be carried out by preparing a solution containing the additive together with either a radical-polymerizable acid anhydride or a third comonomer and then injecting the solution into a reactor or into the piping for feeding ethylene to the reactor, by means of a pump. If necessary, the additive may be injected alone. Where the additive is injected is not particularly limited, but it is preferred to inject it into an intake line for the second-stage compressor, in order to help insure that the additive is well-mixed with ethylene.

Ethylene unit content used in a random copolymer of the present invention is in the range of preferably 55 to 99.9 mol% and more preferably 70 to 99.8 mol%. If the ethylene unit content of a random copolymer is below 55 mol%, the random copolymer has extremely poor formability, so that good laminates are difficult to obtain. If the ethylene unit content of the random copolymer is more than 99.9 mol%, the adhesion strength of the random copolymer is so low that it cannot be used as an adhesive layer.

The radical-polymerizable acid anhydride used for producing a random copolymer, according to the present inventionm, preferably has 15 or less carbon atoms and examples include maleic anhydride and those having an alkenyl or alkanedienyl group having at most 20 carbon atoms which preferably has an unsaturated bond at the end of the group (e.g., 7-octenylmaleic anyhdride, 1,7-octadienyl-maleic anhydride, and 1,17-octadecadienylmaleic anhydride), itaconic anhydride, citraconic anhydride, endic anhydride, 1-butene-3,4-dicarboxylic anhydride, and similar anhydrides. These anhydrides may be used in combination of two or more thereof. Particularly preferred of these are maleic anhydride and itaconic anhydride.

The anhydride unit content derived from the above-described radical-polymerizable acid anhydride in the random copolymer of the present invention is preferably in the range of from 0.1 to 5 mol%, with a particularly preferred range being from 0.3 to 2 mol%. If the anhydride unit content derived from such an acid anhydride is below 0.1 mol%, the resulting laminate has an insufficient interlaminar adhesion strength. On the other hand, a random copolymer having a radical-polymerizable acid anhydride unit content exceeding 5 mol% is very difficult to produce commercially, and even if such a random copolymer can be produced, it has no additioned advantizes. That is, too high an acid anhydride unit content results in high cost and impaired formability.

As a third comonomer that can be used in combination with the radical-polymerizable acid anhydride described above, esters, amides, acids, ethers, hydrocarbon compounds, and other carbon compounds can be used. Examples of esters include vinyl acetate, methyl acrylate, ethyl acrylate, propyl acrylate, butyl acrylate, hexyl acrylate, octyl acrylate, lauryl acrylate, benzyl acrylate, methyl methacrylate, ethyl methacrylate, propyl methacrylate, butyl methacrylate, hexyl methacrylate, octyl methacrylate, lauryl methacrylate, methyl fumarate, ethyl fumarate, propyl fumarate, butyl fumarate, dimethyl fumarate, diethyl fumarate, dipropyl fumarate, dibutyl fumarate, methyl maleate, ethyl maleate, propyl maleate, butyl maleate, dimethyl maleate, diethyl maleate, dipropyl maleate, dibutyl maleate, and the like. Examples of amides include acrylamide, methacrylamide, N-methylacrylamide, N-ethylacrylamide, N-propylacrylamide, N-butylacrylamide, N-hexylacrylamide, N-octylacrylamide, N,N-dimethylacrylamide, N,N-diethylacrylamide, N,N-dimethylmethacrylamide, N,N-diethylmethacrylamide, and the like. Examples of acids include acrylic acid, methacrylic acid, maleic acid, fumaric acid, and the like. Examples of ethers include methyl vinyl ether, ethyl vinyl ether, propyl vinyl ether, butyl vinyl ether, octadecyl vinyl ether, phenyl vinyl ether, and the like. Examples of hydrocarbon compounds include styrene, norbornene, butadiene, acrylonitrile, methacrylonitrile, acrolein, crotonaldehyde, trimethoxyvinylsilane, vinyl chloride, vinylidene chloride, and the like. Particularly preferred compounds of the above examples include acrylic acid esters, methacrylic acid esters, maleic acid esters, fumaric acid esters, acrylic acid, and methacrylic acid. If required or necessary, two or more of these comonomers may be used in combination.

In the case where a third comonomer, described above, is used along with ethylene and a radical-polymerizable acid anhydride to produce a random copolymer, the content of units derived from the third comonomer in a random copolymer of the present invention is preferably less than 40 mol% and more preferably less than 30 mol%. If the third comonomer unit content is 40 mol% or more, the random copolymer has considerably impaired formability, so that laminates according to the present invention are obtained only with difficulty.

As a polymerization initiator used for producing a random copolymer to be employed in this invention, a compound which generates a free radical can be used. Organic peroxides can be preferably used. Examples of the polymerization initiators include dialkyl peroxides such as di-t-butyl peroxide, dicumyl peroxide, and t-butyl cumyl peroxide; diacyl peroxides such as acetyl peroxide, isobutyl peroxide, and octanoyl peroxide; peroxydicarbonates such as diisopropyl peroxydicarbonate and di-2-ethylhexyl peroxydicarbonate; peroxyesters such as t-butyl peroxypivalate and t-butyl peroxylaurate; ketone peroxides such as methyl ethyl ketone peroxide and cyclohexanone peroxide; peroxyketals such as 1,1-bis(t-butylperoxy)-cyclohexane and 2,2-bis(t-butylperoxy)octane; hydroperoxides such as t-butyl hydroperoxide and cumene hydroperoxide; azo compounds such as 2,2-azobisisobutyronitrile; oxygen; and the like. The polymerization initiator is generally used in an amount of 10 to 1000 ppm based on the fed amount of ethylene.

A compound having two or more double bonds per molecule, which compound is added to a polymerization system for producing a random copolymer to be employed in the present invention, can be an ester of an unsaturated carboxylic acid (preferably having not more than 6 carbon atoms) with an unsaturated alcohol (preferably having not more than 6 carbon atoms); a diester of a diol (preferably having not more than 10 carbon atoms) with an unsaturated carboxylic acid (preferably having not more than 6 carbon atoms); a diene (preferably having not more than 8 carbon atoms); or the like. Specific examples of such compounds include allyl acrylate, allyl methacrylate, vinyl acrylate, vinyl methacrylate, tetraethylene glycol diacrylate, triethylene glycol dimethacrylate, tetraethylene glycol dimethacrylate, butadiene, and the like. Preferred of these are triethylene glycol dimethacrylate, tetraethylene glycol diacrylate, tetraethylene glycol dimethacrylate, and allyl methacrylate.

An introduced amount of the above-described compound having two or more double bonds per molecule can generally be from 0.0001 to 2 mol%, preferably from 0.0005 to 1 mol%, as measured at the entrance to the reactor, based on the total weight of the fed monomers (i.e., ethylene, the acid anhydride and the third comonomer). If the amount thereof is less than 0.0001 mol%, desired effects cannot be produced, so that polymers having sufficiently high molecular weights cannot be produced. If the introduced amount thereof exceeds 2 mol%, gelation occurs which impairs film appearance.

An antioxidant which can be added to a polymerization system, used to produce a laminate of the present invention, can be a nucleus-substituted phenol, biphenol, bisphenol, or the like, each of which contains at least one substituent group on the nucleus or nuclei thereof. The substituent group is not particularly limited in kind, but preferred substituents are alkyl and alkenyl groups having up to 4 carbon atoms, a vinyl group, a methyl-substituted vinyl group, an allyl group, alkoxy groups having up to 3 carbon atoms, hydroxyl group, and the like. The number of such substituent groups is preferably 2 or more. Particularly preferred antioxidants are single-nucleus phenols. Specific examples of an antioxidant which can be used to produced laminate of the present invention include p-hydroxybenzaldehyde, hydroquinone monomethyl ether, p-aminophenol, 3,5-xylenol, 2,6-diisopropylphenol, 2-t-butylhydroxyanisole, 4-t-butylpyrocatechol, 2,4-bis(1,1-dimethylpropylphenol), 4,4'-thiobis(3-methyl-6-t-butylphenol), 4,4'-methylenebis(2-methyl-6-t-butylphenol), 4,4'-methylenebis(2,6-di-t-butylphenol), 2,6-di-t-butyl-4-methylphenol, octadecyl 3-(3,5-di-t-butyl-4-hydroxyphenyl)propionate, and the like. Of these, 2,6-di-t-butyl-4-methylphenol, 4,4'-thiobis-(3-methyl-6-t-butylphenol), and octadecyl 3-(3,5-di-t-butyl-4-hydroxyphenyl)propionate are preferred.

The amount of the above-described antioxidant added can generally be from 50 to 2,000 ppm by weight, preferably from 80 to 1,500 ppm by weight, as measured at the entrance to the reactor, based on the weight of the resulting random copolymer. If the amount thereof is below 50 ppm, desired effects cannot be produced and polymerization does not proceed stably. If the introduced amount thereof exceeds 2,000 ppm, favorable results cannot be obtained because the antioxidant acts strongly as a polymerization inhibitor.

In the first embodiment of this invention, both compound having two or more double bonds per molecule and the antioxidant may be added to the polymerization system during polymerization.

A random copolymer to be employed in this invention generally has a melt flow rate measured according to JIS K-7210 at 190°C with a load of 2.16 Kg (hereafter "MFR") in the range of from 0.1 to 50 g/10 min and preferably 0.5 to 40 g/10 min. If the MFR of the random copolymer is outside this range, the copolymer shows very poor formability when used to produce a laminate, so that good laminates cannot be

EP 0 473 823 A1

obtained. It is important that monomers remaining unreacted should be completely removed from the random copolymer produced so that a random copolymer employed in the present invention contains substantially no unreacted monomers. If unreacted monomers are present, they not only cause hygienic problems, but also impair physical properties of the final laminate because the adhesion of the random copolymer layer to the adjacent layer is impaired by the monomers.

In practicing a high-pressure radical copolymerization of ethylene, a radical-polymerizable acid anhydride, and a third comonomer, if the acid anhydride is to be incorporated in a large amount so as to result in a random copolymer which shows sufficient adhesion properties after being processed into a laminate, it becomes difficult to attain a sufficiently high molecular weight due to the chain terminating effect of the acid anhydride and the chain transfer effect of the third comonomer. Because of such a low molecular weight, the resulting random copolymer has insufficient melt tension and, hence, unsuitable for processing into a laminate. Although the above problem can be solved by carrying out the polymerization at low temperatures, low-temperature polymerization necessitates increased power for stirring the contents in the reactor, so that stable polymerization is difficult. These problems can be eliminated by producing a laminate according to the present invention. For example, by adding to the polymerization system a compound having two or more double bonds per molecule, the molecular weight of the random copolymer being produced can be increased at an accelerated rate due to the action of the compound, so that stable polymerization is possible at high temperatures, with no need of increased stirring power. Alternatively, by adding an antioxidant during polymerization, stable polymerization can be carried out at low temperatures. As a result, a random copolymer whose melt tension, formability, and adhesion properties are well-suited for laminate production can be obtained and, hence, the random copolymer can be laminated to an ethylene-vinyl alcohol copolymer to produce a laminate having the above-described characteristics.

According to a second embodiment of the present invention, a laminate can likewise be attained by forming an adhesive layer in the laminate by use of a mixture obtained by mixing a random copolymer comprising ethylene units and a radical-polymerizable acid anhydride unit, with a specific compound, without the addition of another compound having two or more double bonds per molecule or an antioxidant during the polymerization for producing such a random copolymer as described above.

A random copolymer to be employed in this embodiment generally has an MFR in the range of from 0.1 to 50 g/10 min. If the MFR of a random copolymer is outside the above range, the copolymer shows very poor formability when used to produce a laminate and, further, the compatibility of the copolymer with the specific compound is poor, so that good laminates cannot be produced.

A compound to be mixed with the random copolymer is selected from (1) a compound having two or more hydroxyl groups per molecule, (2) a compound having two or more epoxy groups per molecule, (3) a compound obtained by partial ionic crosslinking of a copolymer of ethylene and an unsaturated carboxylic acid or a derivative thereof, and (4) a salt of a metal of Group I or II of the periodic table. If required or necessary, two or more of these compounds may be used in combination.

A compound having two or more hydroxyl groups per molecule may be either low-molecular-weight or high-molecular-weight, and a hydroxyl group herein means an alcoholic hydroxyl group excluding a phenolic one. Examples of such low molecular weight compounds include polyhydric alcohols such as diols, triols, and the like, and examples of high molecular weight compounds include homopolymers or copolymers of unsaturated alcohols, homopolymers or copolymers of unsaturated esters of unsaturated carboxylic acids with diols, and the like. Specific examples of such compounds include ethylene glycol, propylene glycol, 1,4-butanediol, diethylene glycol, triethylene glycol, tetraethylene glycol, polyethylene glycol, glycerin, saponified ethylene-vinyl acetate copolymers, ethylene-hydroxyethyl acrylate copolymers, ethylene-hydroxyethyl methacrylate copolymers, poly(allyl alcohol), ethylene-allyl alcohol copolymers, and the like. Of these, the high molecular weight compounds having a number average molecular weight of at least 5000 are preferred, with saponified ethylene-vinyl acetate copolymers being particularly preferred. These kind of saponified copolymers preferably have an ethylene content of 60 to 95 mol%, a vinyl alcohol content of 5 to 25 mol%, and a vinyl acetate content of remaining unsaponified of not more than 15 mol%. An ethylene content of less than 60 mol% result in problems concerning laminate appearance, corrosion, and odor, while an ethylene content exceeding 95 mol% is disadvantageous in that additives need to be incorporated in large quantities. A vinyl alcohol content of less than 5 mol% are undesirable in that large amounts of additives are required in order to obtain desired effects, while a vinyl alcohol content exceeding 25 mol% causes gelation during the formation of an adhesive layer which impairs the appearance of the resulting laminate. A vinyl acetate content exceeding 15 mol% causes corrosion and odor problems due to acetic acid generated during the formation of an adhesive layer. A preferred range of the MFR of the saponified copolymer is from 0.5 to 100 g/10 min. If the MFR thereof is outside this range, mixing of the saponified copolymer with the above-described random copolymer becomes difficult.

5

As a compound having two or more epoxy groups per molecule, use may be made, for example, of a compound generally known as an epoxy resin or a polymer obtained by utilizing an epoxy compound containing a polymerizable functional group. Of these, the latter is preferred from the standpoint of mixing properties. Specific examples of such preferred compounds include copolymers of epoxy compounds, such as glycidyl acrylate or methacrylate (hereafter collectively referred to as "(meth)acrylate"), vinylepoxycyclohexane, styryl glycidyl ether, vinyl glycidyl ether, allyl glycidyl ether, and the like, with α-olefins (preferably having 4 to 8 carbon atoms) such as ethylene, propylene, butene, or the like, diene compounds (preferably having 4 to 8 carbon atoms) such as butadiene, isoprene, or the like, vinyl compounds such as styrene, vinyl acetate, ethyl vinyl ether, or the like, and other monomers including various (meth)acrylates (e.g., methyl (meth)acrylate, ethyl (meth)acrylate, and butyl(meth)acrylate). Of these, a copolymer of ethylene and glycidyl (meth)acrylate is particularly preferred. This copolymer preferably has an ethylene content of 85 to 99 mol% and a glycidyl (meth)acrylate content of 1 to 15 mol%. If the ethylene content thereof is below 85 mol%, problems concerning corrosion, odor, or the like are caused, while ethylene contents exceeding 99 mol% are unpreferable in that additives should be used in large amounts in order to produce desired effects. Glycidyl (meth)acrylate contents below 1 mol% necessitate the use of large amounts of additives, while glycidyl (meth)acrylate contents exceeding 15 mol% are unfavorable in corrosion, odor, or other problems. Such a ethylene-glycidyl (meth)acrylate copolymer preferably has an MFR of 0.5 to 100 g/10 min. If the MFR of a copolymer is outside this range, mixing of this copolymer with the above-described random copolymer becomes difficult.

A compound obtained by partial ionic crosslinking of a copolymer of ethylene and an unsaturated carboxylic acid or a derivative thereof is a copolymer generally called an ionomer resin. The unsaturated carboxylic acid preferably has up to 10 carbon atoms and may possess one or more carboxylic groups, and the derivative thereof includes those having at least one carboxylic group and an ester group. Examples of an unsaturated carboxylic acid or its derivative to be copolymerized with ethylene include acrylic acid, methacrylic acid, maleic acid, fumaric acid, monomethyl maleate, monomethyl fumarate, monoethyl maleate, monoethyl fumarate, monobutyl maleate, monobutyl fumarate, and the like. Examples of metals that can be utilized for ionic crosslinking include Na, K, Ca, Mg, Zn, and Al. A particularly preferred compound is one obtained by the ionic crosslinking of a copolymer of ethylene and acrylic or methacrylic acid by means of Mg, Zn, or Na. A degree of ionization of the carboxylic groups in this crosslinked compound is preferably 10% or more and may be 100%. If the degree of ionization is below 10%, a crosslinked compound must be added to the random copolymer in a large quantity, so that the resulting laminate has insufficient interlaminar adhesion. The term "defree of ionization" used herein means a percent of equivalent of neutralized carboxylic groups with the metals to equivalent of the whole carboxylic groups in the crosslinked compound and is calculared from the following equation:

$$\text{Degree of Ionization(\%)} = \frac{A}{A + B} \times 100$$

wherein A is an equivalent of neutralized carboxylic groups, and B is an equivalent of non-neutralized carboxylic groups.

Examples of a salt of a metal of Group I or II of the periodic table include salts of inorganic acids such as sodium chloride, calcium chloride, sodium carbonate, or the like, and salts of organic acids. Preferred of these are salts of organic acids such as sodium stearate, calcium stearate, zinc stearate, sodium acetate, potassium acetate, zinc acetate, sodium benzoate, and the like.

Accordig to the present invention, the proportion of the random copolymer comprising ethylene units and radical-polymerizable acid anhydride units to the above-described specific compound in the mixture thereof is preferably in the range specified below. For example, the proportion of the random copolymer in the mixture preferably is higher than 60% by weight. If the amount of the random copolymer is less than 60% by weight, the mixture shows insufficient adhesion properties, so that good laminates cannot be obtained. Furthermore, in the mixture, the ratio of the number of hydroxyl groups, epoxy groups, ions, or metal atoms present in the above-described specific compound to the number of acid anhydride groups contained in the random copolymer is generally in the range of from 0.01/1 to 0.5/1, preferably from 0.1/1 to 0.3/1. If this ratio is below 0.01/1, the resulting mixture cannot have sufficiently improved formability, so that efficient production of a laminate is impossible. If the ratio exceeds 0.5/1, the number of acid anhydride groups, which are effective in imparting good adhesion properties, becomes so small that the mixture shows poor adhesion properties, and further, gelation occurs to impair the appearance of the resulting laminates.

The aforesaid specific compound added to a random copolymer comprising ethylene units and radical-polymerizable acid anhydride units, according to the second embodiment of this invention, serves to increase the melt tension of the random copolymer due to the reaction or strong interaction between the specific compound and acid anhydride moieties in a random copolymer. For this reason, the mixture of a random copolymer and the specific compound has excellent formability and adhesion properties, so that the mixture can be laminated to the ethylene-vinyl alcohol copolymer to produce good laminates.

In mixing a random copolymer with the above-described specific compound, various apparatuses can be utilized which have conventionally been used for thermoplastic resin blending. For example, an extruder, rolls, a Banbury mixer, a kneader, or the like can be used. If required, the random copolymer and the specific compound may be dry-blended without using these mixing apparatuses and the dry blend may be then directly subjected to a laminating machine.

A laminate of the present invention which contains at least one ethylene-vinyl alcohol copolymer layer has a thickness of 30 $\mu$m to 5 mm. In a laminate of this invention, a layer containing a random copolymer comprising ethylene units and radical-polymerizable acid anhydride units is employed as a layer adjacent to the ethylene-vinyl alcohol copolymer layer. It should, however, be noted that a layer containing a random copolymer is not necessarily an intermediate layer and may be utilized as an outermost layer if desired. The shape of a laminate of the present invention is not particularly limited, and such a laminate can be in any form according to need, such as a film, a sheet, a bag, or a bottle.

A laminate of this invention normally employs a polyolefin resin, polystyrene resin, polyester resin, or other suitable resin as an outermost layer. To any of these resins, a random copolymer comprising ethylene units and radical-polymerizable acid anhydride units according to the first embodiment of this invention and for a mixture according to the second embodiment of this invention show tenacious adhesion. Thus, an adhesive layer according to the present invention can be used with a wide variety of other resin layers.

In producing a laminate of this invention, various laminating techniques can be utilized such as co-extrusion laminating, dry laminating, heat laminating, extrusion coating, and other known techniques. Preferably, co-extrusion laminating can be used.

The present invention will be described in more detail by reference to the following examples, which should not be construed to be limiting the scope of the invention. Unless otherwise indicated, all parts, percents, ratios and the like are by weight.

EXAMPLE 1

A laminate having a five-layer structure consisting of three kinds of materials was produced by co-extrusion laminating as described below, the five-layer structure being composed of polypropylene (PP) layers as both outer layers, an ethylene-vinyl alcohol (EVOH) copolymer (ethylene 32 mol%, vinyl alcohol 68 mol%, MFR(230) 4 g/10 min) layer as an intermediate layer, and adhesive resin layers between each outer layer and the intermediate layer and having the thickness of PP/adhesive/EVOH/adhesive/PP of 15/5/10/5/15$\mu$m, respectively.

As the adhesive resin, an ethylene-methyl acrylate-maleic anhydride terpolymer (ethylene 95.5 mol%, methyl acrylate 3.5 mol%, maleic anhydride 1.0 mol%, MFR 2.5 g/10 min) was used. This copolymer was obtained by polymerization at 240°C using high-pressure-process polyethylene-producing facilities in a 4-liter autoclave-type reactor, with allyl methacrylate being added to the polymerization system at a concentration of 0.005 mol% as measured at the entrance to the reactor.

Laminating was carried out using a co-extrusion laminator for producing multi-layer films at a resin temperature of 230°C and a laminate-withdrawing speed of 30 m/min. The co-extrusion laminator used had three 65-mm$\phi$ extruders and a T-die having a width of 1,300 mm. The laminate produced had a total thickness of 50 $\mu$m and an adhesive layer thickness of 5 $\mu$m.

The laminating was carried out without difficulty. The laminate obtained had a good appearance with high transparency. After aging at 40°C for two days, the laminate was evaluated for the 90-degree peel strength (peel rate 300 mm/min) between the polypropylene layer and the ethylene-vinyl alcohol copolymer layer. As a result, the laminate was found to have a peel strength of 580 g/15 mm, which is high enough for practical use. The oxygen permeability at 35°C under dry conditions, of the laminate was also evaluated and its permeability was found to be as low as 0.5 cc$\cdot$20 $\mu$m/m$^2\cdot$24hr$\cdot$atm, showing that the laminate was suited for use as a wrapping or packaging material.

EXAMPLE 2

A laminate having a five-layer structure composed of a polystyrene (PS)(high impact type,, MFR(JIS K-7210, 200°C, 5Kg) 2.0 g/10 min) outermost layer, an adhesive resin layer, an ethylene-vinyl alcohol copolymer (EVOH) layer, an adhesive resin layer, and an innermost layer made of a mixture (LLD•LD) of linear low-density polyethylene (LLD) (MFR 2.2 g/10 min, density 0.922) and ordinary low-density polyethylene (LD) (MFR 6.8 g/10 min, density 0.917) (mixing ratio LD/LLD 30 wt%), respectively, was produced as follows. First, a laminate composed of the three outer layers was produced by a co-extrusion laminating process according to the laminating technique described in Example 1, and then the other two layers were formed by a co-extrusion coating process, with the above-obtained three-layer laminate being used as a base. Thus, a sheet having a total thickness of 300 μm (PS/adhesive/EVOH/adhesive/LLD•LD: 240/10/20/10/20μm, respectively) was obtained. The adhesive resin and ethylene-vinyl alcohol copolymer used above were the same as those used in Example 1.

The laminating could be performed without any particular difficulty. The laminate had interlaminar peel strengths of 400 g/15 mm as measured on the outer adhesive layer and 720 g/15 mm as measured on the inner adhesive layer, these values being high enough for practical use. The sheet obtained had excellent heat-sealing properties and thermocompression bonding properties, and had oxygen permeability equal to that of the laminate obtained in Example 1. The sheet obtained above is particularly suited for use as a food wrapping or packaging material.

EXAMPLES 3 TO 7

Laminates were produced in the same manner as in Example 1 except that the random copolymers shown in Table 1 were used in place of the adhesive resin used in Example 1. As Table 1 shows, all of the thus-obtained laminates were satisfactory in formability and film appearance, and had interlaminar adhesion strengths sufficient for practical use.

Table 1

| Example No. | MFR (g/10 min) | Random copolymer | | | | | | Additive used in polymerization | | Appearance | Formality | Peel strength (g/15 mm) |
|---|---|---|---|---|---|---|---|---|---|---|---|---|
| | | Amount of ethylene (mol%) | Acid anlydride | | Third comonomer | | | Kind | Amount (mol%) | | | |
| | | | Kind | Amount (mol%) | Kind | Amount (mol%) | | | | | | |
| 3 | 2.5 | 93.1 | MAh | 1.1 | EA | 5.8 | | a | 0.006 | good | good | 510 |
| 4 | 2.5 | 93.2 | MAh | 1.2 | EA | 5.6 | | a | 0.006 | good | good | 570 |
| 5 | 2.3 | 94.3 | MAh | 1.2 | MMA | 4.5 | | b | 0.010 | good | good | 480 |
| 6 | 2.5 | 93.8 | IAh | 1.2 | MMA | 5.0 | | c | 0.012 | good | good | 400 |
| 7 | 2.8 | 98.3 | MAh | 1.7 | – | – | | b | 0.015 | good | good | 390 |

Abbreviation

MAh : meleic anhydride

IAh : itaconic anhydride

EA : ethyl acrylate

MMA : methyl methacrylate

a : allyl methacrylete

b : triethylene glycol dimethacrylate

c : tetraethylene glycol diacrylate

## EXAMPLE 8

A laminate was produced in the same manner as in Example 1 except that an adhesive resin was obtained through polymerization during which 2,6-di-t-butyl-4-methylphenol was added, in place of allyl methacrylate, to the polymerization system in an amount of 1,000 ppm by weight as measured at the entrance to the reactor.

The laminating could be carried out without any particular difficulty. The laminate obtained had a good appearance and high transparency and was equal to the laminate of Example 1 in peel strength and oxygen permeability. The above-obtained laminate was found to be suited for use as a wrapping or packaging material.

EXAMPLE 9

A laminate was produced in the same manner as in Example 2 except that the same adhesive resin as that employed in Example 8 was used.

The laminating could be carried out without any particular difficulty. The laminate had interlaminar peel strengths of 400 g/15 mm as measured on the outer adhesive layer and 720 g/15 mm as measured on the inner adhesive layer, these values being high enough for practical use. The sheet obtained had excellent heat-sealing properties and thermocompression bonding properties, and had oxygen permeability equal to that of the laminate obtained in Example 8. The sheet obtained above is particularly suited for use as a food wrapping or packaging material.

EXAMPLES 10 TO 14

Laminates were produced in the same manner as in Example 8 except that the random copolymers shown in Table 2 were used in place of the adhesive resin used in Example 8. As Table 2 shows, all of the thus-obtained laminates were satisfactory in formability and film appearance, and had interlaminar adhesion strengths sufficient for practical use.

Table 2

| Example No. | MFR (g/10 min) | Random copolymer | | | | | | Antioxidant | | Appearance | Formality | Peel strength (g/15 mm) |
|---|---|---|---|---|---|---|---|---|---|---|---|---|
| | | Amount of ethylene (mol%) | Acid anhydride | | Third comonomer | | | | | | | |
| | | | Kind | Amount (mol%) | Kind | Amount (mol%) | | Kind | Amount (mol%) | | | |
| 10 | 2.5 | 93.1 | MAh | 1.2 | EA | 5.7 | | d | 800 | good | good | 520 |
| 11 | 2.5 | 93.1 | MAh | 1.2 | EA | 5.7 | | d | 800 | good | good | 560 |
| 12 | 2.3 | 94.1 | MAh | 1.1 | MMA | 4.5 | | e | 1200 | good | good | 490 |
| 13 | 2.5 | 94.1 | IAh | 1.2 | MMA | 4.7 | | f | 1200 | good | good | 390 |
| 14 | 2.8 | 98.4 | MAh | 1.6 | – | – | | d | 850 | good | good | 370 |

Abbreviation  MAh: meleic anhydride    d: 2,6-di-t-butyl-4-methylphenol

IAh: itaconic anhydride    e: 4,4'-thiobis(3-methyl-6-t-butylphenol)

EA : ethyl acrylate    f: octadecyl 3-(3,5-di-t-butyl-4-hydroxyphenyl)propinate

MMA: methyl methacrylate

EXAMPLE 15

A laminate was produced in the same manner as in Example 1 except that the adhesive copolymer mixture as specified below was used in place of the adhesive resin used in Example 1.

As the adhesive copolymer mixture, use was made of a mixture obtained by mixing an ethylene-methyl acrylate-maleic anhydride terpolymer (ethylene 95.5 mol%, methyl acrylate 3.5 mol%, maleic anhydride 1.0 mol%, MFR 11 g/10 min) with 3 wt% of an ethylene-glycidyl methacrylate copolymer (ethylene 96.2 mol%, glycidyl methacrylate 3.8 mol%, MFR 2.5 g/10 min). These copolymers had been obtained by using high-pressure-process polyethylene-producing facilities having a 4-liter autoclave-type reactor, and were mixed with each other by means of a 50-$\phi$ extruder.

The laminating could be carried out without any particular difficulty. The laminate obtained had a good appearance and high transparency, and was equal to the laminate of Example 1 in peel strength and oxygen permeability. The above-obtained laminate was found to be suited for use as a wrapping or packaging material.

EXAMPLE 16

A laminate was produced in the same manner as in Example 2 except that the same adhesive copolymer mixture as that employed in Example 15 was used.

The laminating could be carried out without any particular difficulty. The laminate had interlaminar peel strengths of 400 g/15 mm as measured on the outer adhesive layer and 720 g/15 mm as measured on the inner adhesive layer, these values being high enough for practical use. The sheet obtained had excellent heat-sealing properties and thermocompression bonding properties, and had oxygen permeability equal to that of the laminate obtained in Example 15. The sheet obtained above is particularly suited for use as a food wrapping or packaging material.

EXAMPLES 17 TO 23

Laminates were produced in the same manner as in Example 15 except that the random copolymer-additive mixtures as shown in Table 3 were used in place of the adhesive copolymer mixture used in Example 15. As Table 3 shows, all of the thus-obtained laminates were satisfactory in formability and film appearance, and had interlaminar adhesion strengths sufficient for practical use.

## Table 3

| Example No. | MFR (g/10 min) | Amount of ethylene (mol%) | Acid anlydride Kind | Amount (mol%) | Third comonomer Kind | Amount (mol%) | Antioxidant Kind | Amount (wt%) | Appearance | Formality | Peel strength (g/15 mm) |
|---|---|---|---|---|---|---|---|---|---|---|---|
| 17 | 12.5 | 92.5 | MAh | 1.3 | EA | 6.2 | g | 3.5 | good | good | 540 |
| 18 | 12.5 | 92.5 | MAh | 1.3 | EA | 6.2 | h | 3.0 | good | good | 520 |
| 19 | 12.5 | 92.5 | MAh | 1.3 | EA | 6.2 | i | 0.1 | good | good | 370 |
| 20 | 12.5 | 92.8 | MAh | 1.4 | EA | 5.8 | j | 1.8 | good | good | 600 |
| 21 | 10.9 | 93.9 | MAh | 1.0 | MMA | 5.1 | k | 0.5 | good | good | 520 |
| 22 | 9.8 | 93.7 | IAh | 1.5 | MMA | 4.8 | l | 0.4 | good | good | 380 |
| 23 | 11.3 | 98.3 | MAh | 1.7 | – | – | g | 5.0 | good | good | 400 |

Abbreviation
MAh: meleic anhydride          IAh: itaconic anhydride
EA : ethyl acrylate            MMA: methyl methacrylate

g : ethylene-hydroxethyl methacrylate copolymer (MFR 7 g/10 min, ethylene 84 wt%, hydroxyethyl methacrylate 16 wt%)

h : saponified ethylene-vinyl acetate copolymer produced by Takada Chemical Industries, Ltd., Japan (MFR(230) 21 g/10 min, ethylene 67 wt%, vinyl acetate 13 wt%, vinyl alcohol 20 wt%)

i : triethylene glycol

j : Na-containing ionomer produced by Du Pont-Mitsui Polychemicals Co., Ltd. (MFR 2.8 g/10 min, comonomer 20 wt%)

k : sodium benzoate

l : calcium stearate

COMPARATIVE EXAMPLE 1

A laminate was produced in the same manner as in Example 1 except that an ethylene-methyl acrylate-maleic anhydride terpolymer obtained by polymerizing the monomers without the addition of allyl methacrylate was used as an adhesive resin. The polymerization for producing the terpolymer had to be carried out at an elevated temperature in order to keep the polymerization stable, so that the resulting terpolymer had an MFR as high as 13 g/10 min. In laminating, difficulties were encountered because stable melt films could not be obtained from the adhesive resin, with considerable unevenness in film thickness. The laminate also had uneven interlaminar adhesion strengths. Hence, the laminate was unsuited for practical use.

COMPARATIVE EXAMPLE 2

A laminate was produced in the same manner as in Example 1 except that modified polypropylene (MFR(230) 5.5 g/10 min, maleic anhydride 0.28 wt%) obtained by grafting maleic anhydride onto polypropylene was used as an adhesive resin. The modified polypropylene was produced by blending a polypropylene powder with 1.8 wt% of maleic anhydride and 1.2 wt% of benzoyl peroxide with a Henschel mixer, kneading the blend by means of an extruder to carry out a graft reaction, and then pelletizing the graft polymer.

Although the laminating could be conducted without any particular difficulty, gelation occurred and fish eyes were conspicuous probably because of the maleic anhydride remaining ungrafted. Further, the laminate obtained had an interlaminar adhesion strength as low as 270 g/15 mm, showing that the laminate had insufficient performance for practical use.

While the invention has been described in detail and with reference to specific embodiments thereof, it will be apparent to one skilled in the art that various changes and modifications can be made therein without departing from the spirit and scope thereof.

**Claims**

1. A laminate comprising at least one ethylene-vinyl alcohol copolymer layer and at least one adhesive layer comprising:
   (i) a random copolymer which comprises ethylene units and radical-polymerizable acid anhydride units, wherein said random copolymer is obtained through a polymerization, and (a) a first compound having two or more double bonds per molecule or (b) an antioxidant is added to the polymerization system during said polymerization; or
   (ii) a mixture of (a) a random copolymer comprising ethylene units and radical-polymerizable acid anhydride units and (b) at least one member selected from the group consisting of (1) a second compound having two or more hydroxyl groups per molecule, (2) a third compound having two or more epoxy groups per molecule, (3) a fourth compound obtained by partial ionic crosslinking of a copolymer of ethylene and an unsaturated carboxylic acid or a derivative thereof, and (4) a salt of a metal of Group I or II of the periodic table.

2. A laminate as claimed in claim 1, wherein said adhesive layer comprises said random copolymer (i).

3. A laminate as claimed in claim 2, wherein said random copolymer (i) is obtained through said polymerization during which said first compound is added to said polymerization system.

4. A laminate as claimed in claim 2, wherein said random copolymer (i) is obtained through said polymerization during which said antioxidant is added to said polymerization system.

5. A laminate as claimed in claim 1, wherein said adhesive layer comprises said mixture (ii).

6. A laminate as claimed in Claim 5, wherein said member (b) is said second compound (1).

7. A laminate as claimed in Claim 5, wherein said member (b) is said third compound (2).

8. A laminate as claimed in Claim 5, wherein said member (b) is said fourth compound (3).

9. A laminate as claimed in Claim 5, wherein said member (b) is said metal salt (4).

10. A process for producing a laminate, which comprises forming an adhesive layer on an ethylene-vinyl alcohol copolymer layer, said adhesive layer comprising:
    (i) a random copolymer which comprises ethylene units and radical-polymerizable acid anhydride

14

units, wherein said random copolymer is obtained through a polymerization, and (a) a first compound having two or more double bonds per molecule or (b) an antioxidant is added to the polymerization system during said polymerization; or

(ii) a mixture of a random copolymer comprising (a) ethylene units and radical-polymerizable acid anhydride units and at least one member selected from the group consisting of (1) a second compound having two or more hydroxyl groups per molecule, (2) a third compound having two or more epoxy groups per molecule, (3) a fourth compound obtained by partly and ionically crosslinking a copolymer of ethylene and an unsaturated carboxylic acid or a derivative thereof, and (4) a salt of a metal of Group I or II of the periodic table.

11. A process as claimed in claim 10, wherein said adhesive layer comprises said random copolymer (i).

12. A process as claimed in claim 11, wherein said random copolymer (i) is one obtained through said polymerization during which said first compound is added to sail polymerization system.

13. A process as claimed in claim 11, wherein said random copolymer (i) is obtained through said polymerization during which said antioxidant is added to said polymerization system.

14. A process as claimed in claim 10, wherein said adhesive layer is made of said mixture (ii).

15. A process as claimed in Claim 14, wherein said member (b) is said second compound (1).

16. A process as claimed in Claim 14, wherein said member (b) is said third compound (2).

17. A process as claimed in Claim 14, wherein said member (b) is said fourth compound (3).

18. A process as claimed in Claim 14, wherein said member (b) is said meral salt (4).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | WORLD PATENTS INDEX LATEST, week 43, accession no. 90-326070, Derwent Publications Ltd, London, GB; & JP-A-2 235 741 (SHOWA DENKO K.K.) 18-09-1990 --- | 1-3,10-12 | B 32 B 27/08 C 08 F 210/02 C 08 L 23/08 |
| E | WORLD PATENTS INDEX LATEST, week 43, accession no. 90-326071, Derwent Publications Ltd, London, GB; & JP-A-2 235 742 (SHOWA DENKO K.K.) 18-09-1990 --- | 1,2,4, 10,11, 13 | |
| Y | WO-A-9 000 114 (NORSOLOR) * Page 1, line 31 - page 2, line 20 * --- | 1,2,4-7 ,9-11, 13-16, 18 | |
| Y | WORLD PATENTS INDEX LATEST, week 30, accession no. 89-217495, Derwent Publications Ltd, London, GB; & JP-A-1 156 309 (SHOWA DENKO K.K.) 19-06-1989 --- | 1,2,4, 10,11, 13 | |
| A | EP-A-0 312 459 (NORSOLOR) * Claims 1,3,4 * --- | 3 | |
| E | WPIL, week 43, accession no. 90-326072, Derwent Publications Ltd, London, GB; & JP-A-2 235 743 (SHOWA DENKO K.K.) 18-09-1990 * The whole document * --- | 1,5-8, 10,14-17 | **TECHNICAL FIELDS SEARCHED (Int. Cl.5)** B 32 B C 08 F C 08 L C 09 J |
| Y | FR-A-2 131 540 (ETHYLENE PLASTIQUE) * Claim 1; page 2, lines 29-33; page 4, lines 14-24 * --- | 1,5,6, 10,14, 15 | |
| Y | FR-A-2 205 560 (KURARAY CO., LTD) * Claims 1,5; page 7, lines 18-20; page 8, lines 11-24; page 15, line 32 - page 16, line 12 * --- -/- | 7,9,16, 18 | |

The present search report has been drawn up for all claims

| Place of search | Date of completion of the search | Examiner |
|---|---|---|
| THE HAGUE | 30-08-1991 | IBARROLA TORRES O.M. |

European Patent
Office

| | **CLAIMS INCURRING FEES** |
|---|---|

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

| X | **LACK OF UNITY OF INVENTION** |
|---|---|

The Search Division considers that the present European patent application does not comply with the requirement of unity of invention and relates to several inventions or groups of inventions,
namely:

See sheet -B-

☒ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☐ None of the further search fees has been paid within the fixed time limit. The present European search report has been drawn up for those parts of the European patent application which relate to the invention first mentioned in the claims,

namely claims:

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 308 703 (KURARAY CO., LTD)<br>* Page 6, lines 23-48 * | 1,10 | |
| A | FR-A-2 387 262 (RAYCHEM LTD)<br>* Claims 1,3,6; page 2, line 36 - page 4, line 32 * | 8,17 | |
| A | EP-A-0 141 733 (SOCIETE CHIMIQUE DES CHARBONNAGES S.A.)<br>* Claims 1,10,13,15 * | 7,16 | |
| A | US-A-3 637 579 (W.P. BARIE et al.)<br>* Claims 1,6 * | 7,16 | |
| A | US-A-4 144 113 (A. MORI et al.)<br>* Claim 1; column 3, lines 3-16 * | 9,18 | |
| A | FR-A-2 522 670 (ATO CHIMIE)<br>* Claims 1,9,17 * | 6,15 | |
| A | WPIL, week 51, accession no. 82-09960J, Derwent Publications Ltd, London, GB; & JP-A-57 182 435 (TOYO INK. MFG. K.K.) 10-11-1982<br>* The whole document * | 1,9,10, 18 | TECHNICAL FIELDS SEARCHED (Int. Cl.5) |

The present search report has been drawn up for all claims

| Place of search | Date of completion of the search | Examiner |
|---|---|---|
| THE HAGUE | 30-08-1991 | IBARROLA TORRES O.M. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)

European Patent

Office

EP 90 11 7105   -B-

---

## LACK OF UNITY OF INVENTION

The Search Division considers that the present European patent application does not comply with the requirement of unity of invention and relates to several inventions or groups of inventions, namely:

1. Claims 1,10: Limited to: adhesive comprising (i) random copolymer obtained adding (a) or (b) to the polymerization system.
   Claims 2,3,4,11,12,13

2. Claims 1,10: Adhesive comprising (ii) mixture of (a) and (b).
   Claims 5,6,7,8,9,14,15,16,17,18

1. Claims 1,10(limited to: adhesive comprising (i))
        2,3,4,11,12,13
   Describe a laminate and a process for its production. The laminate comprising at least one layer of EVOH copolymer and at least one adhesive layer.
   This adhesive comprising:
   (i) random copolymer of ethylene units and radical - polymerizable acid anhydride units, obtained adding to the polymerization systems during the polymerization:
       (a) compound having two or more double bonds per molecule, or
       (b) antioxidant

2. Claims 1,10 (limited to: adhesive comprising (ii))
        5,6,7,8,9,14,15,16,17,18
   Describe a laminate and a process for its production. The laminate comprising at least one layer of EVOH copolymer and at least one adhesive layer.
   This adhesive comprising:
   (ii) mixture of (a) random copolymer of ethylene units and radical - polymerizable acid anhydride units and (b) at least one member selected from the group of (1) compound with two or more hydroxyl groups per molecule, (2) compound with two or more epoxy groups per molecule, (3) compound obtained by partial ionic crosslinking of a copolymer of ethylene and an unsaturated carboxylic acid or a derivative thereof, and (4) salt of a metal of group I or II of the periodic table.